# EUROPÄISCHE PATENTSCHRIFT

(11) **EP 0 787 746 B1**
(45) Veröffentlichungstag und Bekanntmachung des Hinweises auf die Patenterteilung: **11.08.1999**
(21) Anmeldenummer: 97100880.0
(22) Anmeldetag: 21.01.1997
(51) Int. Cl.: C08F 4/642, C08F 10/00, C08F 4/02

(54) **Verfahren zur Herstellung von Katalysatorträgern und geträgerter Polyolefin-Katalysatoren sowie deren Verwendung für die Herstellung von Polyolefinen**
Process for manufacturing catalyst supports and supported polyolefin catalysts and the use thereof for the preparation of polyolefins
Procédé pour la préparation de supports de catalyseurs et catalyseurs supportés pour l'obtention de polyoléfines ainsi que leur utilisation dans la préparation de polyoléfines

(30) Priorität: 02.02.1996 AT 18896
(43) Veröffentlichungstag der Anmeldung: 06.08.1997
(73) Patentinhaber: Borealis AG, 2323 Schwechat-Mannswörth (AT)
(72) Erfinder: Ernst, Eberhard, Dr., 4223 Katsdorf (AT); Reussner, Jens, Dr., 4201 Gramastetten (AT)
(74) Vertreter: Kunz, Ekkehard, Dr.

(56) Entgegenhaltungen:
- EP-A- 0 685 494
- EP-A- 0 692 505

## Beschreibung

Die Erfindung betrifft Katalysatorträger auf Basis von anorganischen Oxiden, mit diesen Katalysatorträgern hergestellte geträgerte Polyolefin-Katalysatoren sowie deren Verwendung bei der Olefin-Polymerisation.

Polypropylen läßt sich beispielsweise gemäß EP-A-530.647 durch den Einsatz von Polyolefin-Katalysatoren herstellen, welche aus einem Metallocen und einem Aktivator bzw. Cokatalysator, wie z. B. Methylaluminoxan (MAO) oder einem Perfluorotetraphenylborat, bestehen. Beim Einsatz solcher homogener Katalysatoren bei der Polymerisation werden allerdings Pulver mit nur geringer Schüttdichte erhalten. Die Kornmorphologie solcher Produkte läßt sich prinzipiell durch eine spezielle Vorbehandlung des Metallocens mit dem Cokatalysator etwas verbessern (EP-302 424). Nachteilig bei einem solchen Verfahren ist jedoch vor allem die starke Belagbildung in technischen Reaktoren (EPA 563 917).
Auch die Verwendung von Methylaluminoxan als Trägermaterial, welches in aliphatischen Lösungsmitteln unlöslich ist, bringt zwar eine gewisse Verbesserung der Aktivität, aber ebenfalls nur pulverförmige Produkte (Polymer 1991, Vol. 32, 2671 - 2673), das Verfahren ist außerdem unwirtschaftlich.
Eine Trägerung des Metallocens auf oxidische Materialien, wie Siliziumoxid oder Aluminiumoxid, unter Vorbehandlung des gegebenenfalls teilweise entwässerten Ausgangsmaterials mit dem Cokatalysator ist eine aus WO 91/09882 bekannte Methode, die bei der Ethylenhomo- und -copolymerisation eingesetzt wird. Dabei wird jedoch die Partikelgröße des Polymerkorns wesentlich durch die Teilchengröße des Trägermaterials bestimmt, so daß einer Kornvergrößerung im Vergleich zu konventionellen Magnesiumchlorid-Trägerkatalysatoren Grenzen gesetzt sind.
Weitere Verfahren beschreiben die Modifikation des oxidischen Trägers mit MAO und anschließender Auftragung des Metallocens (EPA 0206794). Dabei ist jedoch die Steuerung der Partikelgröße durch die Eigenschaften des Trägermaterials eingeschränkt.
In der EP-A-685494 wird ein weiterer Trägerkatalysator beschrieben, der durch die Auftragung von Methylaluminoxan auf ein hydrophiles Oxid, nachfolgender Vernetzung des MAO mit einem mehrfunktionellen organischen Vernetzungsmittel und anschließender Auftragung eines aktivierten MAO/Metallocenkomplexes hergestellt wird. Nachteil dieses Trägerkatalysators ist es, daß bei den in technisch relevanten Anlagen erzielten höheren Polymerisationsumsätzen die Festigkeit des Trägerkatalysators nicht ausreicht um eine kompakte, granulatartige Morphologie der Polymerprodukte zu gewährleisten. Die Folge ist eine Erniedrigung der Schüttdichte und die Erhöhung der Feinkornanteile, was aus technischer Sicht erhebliche Probleme bereitet.

Es bestand deshalb die Aufgabe, ein Verfahren zu entwickeln, welches es gestattet, einen geträgerten Polyolefin-Katalysator herzustellen, der für die Polymerisation von Polyolefinen einsetzbar ist und auch bei hohen Polymerisationsumsätzen die beschriebenen Nachteile vermeidet.

Überraschenderweise wurde nun gefunden, daß bei Verwendung eines speziellen Trägermaterials und anschließende Fixierung des Katalysators, beim Einsatz dieser geträgerten Polyolefin-Katalysatoren in der Polymerisation von Olefinen hohe Polymerisationsumsätze und Schüttdichten der Produkte erhalten werden, und die Korngröße und Korngrößenverteilung der Polymeren gezielt eingestellt werden können.

Gegenstand der vorliegenden Erfindung ist somit ein Verfahren zur Herstellung eines Katalysatorträgers, das dadurch gekennzeichnet ist, daß man
a) ein hydrophiles anorganisches Oxid eines Elementes aus der II. bis IV. Hauptgruppe oder der IV. Nebengruppe des Periodensystems oder deren Mischungen bzw. Mischoxide bei 110 bis 800°C trocknet, anschließend
b) gegebenenfalls die freien Hydroxylgruppen des Oxids ganz oder teilweise mit Aluminoxanen oder Aluminiumalkylen umsetzt und anschließend
c) gleichzeitig mit Aluminoxanen und mehrfunktionellen organischen Vernetzungsmitteln umsetzt.

Die eingesetzten hydrophilen, Hydroxylgruppen enthaltenden Oxide sind üblicherweise wasserhältig. Sie sind bevorzugt markoporös und dispers und besitzen üblicherweise eine mittlere Partikelgröße von 10 bis 300 micrometer, vorzugsweise von 30 bis 100 micrometer. Die Trägeroxide sind kommerziell erhältlich, bevorzugt werden Aluminiumoxid, Siliziumoxid, Magnesiumoxid, Titanoxid und Zirkoniumoxid eingesetzt. Besonders bevorzugt eingesetzt werden Siliziumdioxide vom Grace Davison Typ. Als Ausgangsmaterial eignen sich jedoch auch hochdisperse Oxide, beispielsweise solche gemäß DE-PS 870.242 oder EP-A-585.544, die nach dem Hochtemperaturhydrolyseverfahren aus gasförmigen Metallchloriden oder Siliziumverbindungen hergestellt werden.

Ein weiterer Gegenstand der Erfindung ist der gemäß dem erfindungsgemäßen Verfahren hergestellte Katalysatorträger. Der erfindungsgemäße Katalysatorträger wird in einer mehrstufigen Reaktion aus einem hydrophilen anorganischen Oxid hergestellt:

In der ersten Stufe (a) wird das Oxid im Stickstoffstrom oder im Vakuum bei Temperaturen von 110 bis 800 °C innerhalb von 1 bis 24 Stunden entwässert. Anschließend erfolgt eine Messung der sich in Abhängigkeit von der gewählten Trocknungstemperatur einstellenden Konzentration der freien Hydroxylgruppen. Die freien Hydroxylgruppen können in Stufe (b) ganz oder teilweise mit Aluminoxanen oder Al-Alkylen umgesetzt werden.
In Stufe (c) wird das getrocknete Oxid gleichzeitig mit Aluminoxanen und mindestens einem mehrfunktionellen organischen Vernetzungsmittel umgesetzt, wobei es beispielsweise derart in einem geeigneten Kohlenwasserstoff-Lösungsmittel wie z. B. in Toluol suspendiert wird, daß es mit dem Lösungsmittel bedeckt ist, wobei die Lösungsmittel für das Aluminoxan und für das Vernetzungsmittel mischbar sein müssen. Bevorzugt werden die gleichen Lösungsmittel verwendet. Besonders bevorzugt wird Toluol eingesetzt.

Erfindungsgemäß wird dabei ein Aluminoxan der Formel I für den linearen Typ: 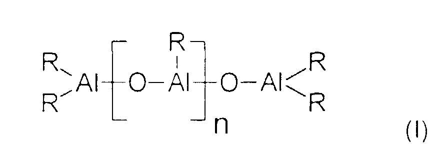 und / oder der Formel II: 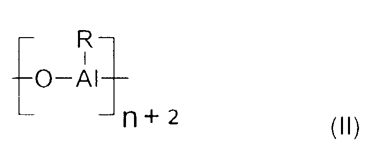 für den cyclischen Typ eingesetzt, wobei in den Formeln I und II die Reste R gleich oder verschieden sein können und eine C₁-C₆-Alkylgruppe bedeuten und n eine ganze Zahl von 1 - 50 ist. Bevorzugt sind die Reste R gleich und bedeuten Methyl, Isobutyl, Phenyl oder Benzyl. Das Aluminoxan kann auf verschiedene Arten nach bekannten Verfahren hergestellt werden. Eine Möglichkeit ist beispielsweise die Umsetzung von Aluminiumalkylen mit kristallwasserhaltigem Aluminiumsulfat (Hoechst EP-A-302424). In der vorliegenden Erfindung wird bevorzugt handelsübliches Methylaluminoxan (MAO, Fa. Witco) verwendet, das in Toluol gelöst ist.
Bei der Herstellung des Katalysatorträgers liegt das Molverhältnis Aluminium (als Aluminoxan) zu Oberflächenhydroxylgruppen zwischen 1 und 50, bevorzugt zwischen 1 und 30, besonders bevorzugt zwischen 5 und 20.

Zur Herstellung der in Stufe c) benötigten Lösung kann für das Vernetzungsmittel das gleiche Lösungsmittel wie für die MAO-Lösung verwendet werden. Aufgrund der Temperaturabhängigkeit der Löslichkeit dieser Vernetzungsmittel im verwendeten Lösungsmittel kann die gewünschte Konzentration gezielt durch die Wahl der Temperatur der Lösung eingestellt werden. Besonders vorteilhaft ist die Wahl eines solchen Lösungsmittels, dessen Siedepunkt unterhalb der Zersetzungstemperatur des in Stufe c) hergestellten Feststoffs liegt. Bevorzugt werden aromatische Lösungsmittel wie Xylol, Benzol oder Toluol eingesetzt. Besonders geeignet ist Toluol.
Als erfindungsgemäß zu verwendende mehrfunktionelle organische Vernetzungsmittel sind alle organischen Verbindungen mit mehr als einer funktionellen Gruppe geeignet, die mit einer Metallkohlenstoff-Bindung reagieren können. Bevorzugt werden bifunktionelle Vernetzungsmittel verwendet. Solche bifunktionelle organische Verbindungen können zum Beispiel aliphatische oder aromatische Diole, Aldehyde, Dicarbonsäuren, primäre oder sekundäre Diamine, Diepoxiverbindungen sein. Um störende Nebenreaktionen oder Reaktionsprodukte zu vermeiden, die einen zusätzlichen Reinigungsaufwand mit sich bringen würden, werden bevorzugt aliphatische und aromatische Diole, sekundäre Amine oder Diepoxiverbindungen oder deren Mischungen eingesetzt. Besonders bevorzugt handelt es sich um Ethylenglycol, Butandiol, Bisphenol A und 1,4-Butandioldiglycidether. Als tri- oder höherfunktionelle Vernetzungsmittel können beispielsweise Triethanolamin, Glycerin, Phloroglucin oder Tetraethylenpentamin eingesetzt werden.

Beim Einsatz der mehrfunktionellen Vernetzungsmittel besteht außerdem die Möglichkeit, in einer weiteren Reaktionsstufe nicht umgesetzte reaktive Gruppen mit beispielsweise Alkylaluminiumverbindungen, vorzugsweise mit Trimethylaluminium zu desaktivieren.
Das Molverhältnis zwischen dem in der Stufe c) als Aluminoxan eingesetzten Aluminium und dem Vernetzungsmittel kann in einem weiten Bereich schwanken und liegt zwischen 1 und 100, bevorzugt zwischen 1 und 40, besonders bevorzugt zwischen 10 und 25. Es ist insbesondere von der Art und Vorbehandlung der Metalloxide, der Art der verwendeten Aluminoxane, vom jeweiligen Molverhältnis von Al (als Aluminoxan) zu Oberflächenhydroxylgruppen am Metalloxid sowie von der Art des Vernetzers abhängig. Höhere Molverhältnisse Al zu Vernetzungsmittel werden dabei vor allem dann angewendet, wenn tri- oder höherfunktionelle Vernetzungsmittel eingesetzt werden, die eine entsprechend höhere Anzahl von Vernetzungsmöglichkeiten aufweisen.

Das suspendierte getrocknete Oxid der Stufe a) wird vorzugsweise mit einer Lösung aus Aluminoxan und einer Lösung eines oder mehrerer mehrfunktioneller organischer Vernetzungsmittel im gleichen Lösungsmittel behandelt. Gegebenenfalls ist es in einer Stufe b) auch möglich, die freien Hydroxyl-Gruppen des Oxides vor der Vernetzungsreaktion mit bis zur equimolaren Menge eines Aluminoxans oder einer Alkylaluminium-Lösung, wie beispielsweise Trimethylaluminium, umzusetzen. Bevorzugt wird dabei MAO verwendet. Es erweist sich als besonders günstig, wenn alle Hydroxyl-Gruppen abgesättigt sind. Ein positiver Effekt ergibt sich jedoch bereits bei einer teilweisen Absättigung.
Die Dosierung der Lösungsmengen erfolgt gleichzeitig und kontinuierlich, gegebenenfalls wird die Vernetzungsmittel-Lösung temperiert. Die Wahl der Temperatur für die Temperierung richtet sich nach der Löslichkeit des Vernetzungsmittels im gewählten Lösungsmittel und nach der gewünschten Vernetzungsdichte auf der Trägeroberfläche. Die Geschwindigkeit der beiden zu dosierenden Volumenströme kann mittels Dosierpumpen eingestellt werden und liegt in einem Bereich zwischen 0,1 und 1000 ml pro Minute, bevorzugt zwischen 0,5 und 250 ml pro Minute, besonders bevorzugt zwischen 1 und 50 ml pro Minute. Vorzugsweise wird die Reaktion so geführt, daß das gesamte MAO nach der gleichzeitigen Dosierung der beiden Lösungen umgesetzt ist. Schwankungen der Reaktionsbedingungen im technischen Maßstab können unter Umständen dazu führen, daß unumgesetztes MAO in der Lösung verbleibt. Brauchbare Katalysatorträger gemäß EP-A-685494 zeigen einen löslichen Al-Anteil im verwendeten Lösungsmittel von vorzugsweise kleiner 1,4 Mol-% bezogen auf eingesetztes MAO. In diesem Fall ist es möglich, einen oder mehrere Waschschritte durchzuführen, um die geforderte Grenzkonzentration zu unterschreiten.
Nach Beendigung der Zudosierung wird die Reaktionsmischung ca. 60 Minuten weiter gerührt und danach das Lösungsmittel abgetrennt. Der Rückstand kann im Vakuum getrocknet werden, vorzugsweise jedoch wird er im feuchten Zustand weiterverwendet.

Der durch das erfindungsgemäße Verfahren hergestellte Katalysatorträger kann vorteilhafterweise für die Herstellung eines geträgerten Polyolefin-Katalysators eingesetzt werden.

Ein weiterer Gegenstand der Erfindung ist demnach ein geträgerter Polyolefin-Katalysator (Trägerkatalysator), der das Umsetzungsprodukt aus (A) einem oben beschriebenen, erfindungsgemäßen Katalysatorträger mit (B) einem Polyolefin-Katalysator oder Mischungen aus mehreren Polyolefin-Katalysatoren enthält. Mögliche Polyolefin-Katalysatoren sind beispielsweise Metallocene, wobei prinzipiell jedes Metallocen oder Mischungen von Metallocenen umgesetzt werden können. Mögliche Metallocene sind z. B. unverbrückte, unsubstituierte oder substituierte Cyclopentadienyl-, Indenyl- und Fluorenyl-Verbindungen von Metallen der Gruppe IVb, Vb oder Vlb des Periodensystems, wie zum Beispiel Bis(1,2-dimethylcyclopentadienyl)zirkoniumdichlorid (EP-A-283739); verbrückte, unsubstituierte oder substituierte, unsymmetrische oder symmetrische Cyclopentadienyl-, Indenyl- und Fluorenyl-Verbindungen von Metallen der Gruppe IVb, Vb oder Vlb des Periodensystems, wie z. B. Dimethylsilandiyl-bis(indenyl)zirkoniumdichlorid (EP-A-574597), Dimethylsilandiyl-bis(2-methylindenyl)zirkoniumdichlorid (EP-A-485822), Bis(trimethylsilyl)silandiyl-bis(2-methylindenyl)zirkoniumdichlorid (DE-Anmeldung 19527047) oder Isopropyliden(cyclopentadienyl)(fluorenyl)zirkoniumdichlorid (EP-A-351391).
Die Herstellung des geträgerten Metallocenkatalysators erfolgt dadurch, daß man den erfindungsgemäßen Katalysatorträger in einem inerten Kohlenwasserstoff, bevorzugt Toluol, suspendiert und mit dem Metallocen in Kontakt bringt. Dabei wird das Metallocen beispielsweise in einem inerten Kohlenwasserstoff aufgelöst. Als inerte Lösungsmittel können beispielsweise aliphatische oder aromatische Kohlenwasserstoffe, bevorzugt Toluol verwendet werden. Die Metallocene werden vorzugsweise in einer Menge von 0,3 Masse-% bis 5 Masse-% bezogen auf die Gesamtmasse des Trägerkatalysators eingesetzt. Die Mischzeit beträgt 5 min bis 24 Stunden, vorzugsweise 1 bis 6 Stunden. Man arbeitet bei einer Temperatur von -10 bis +80°C, insbesondere bei 20 bis 70°C. Bevorzugt wird die Auftragung des Metallocens im Anschluß an die Trägersynthese durchgeführt, um einen Trocknungsschritt einzusparen. Nach Beendigung der Reaktion wird das Lösungsmittel dekantiert und im Vakuum abgezogen bis ein frei fließender Feststoff zurückbleibt.
Der Metallocengehalt des Trägerkatalysators liegt im Bereich zwischen 0,01 bis 5 Gew.%, vorzugsweise zwischen 0,1 bis 3 Gew.% bezogen auf die Masse des Trägerkatalysators.

Desweiteren sind Polyolefin-Katalysatoren auf Basis von Übergangsmetallsalzen der IV. bis VIII. Nebengruppe des Periodensystems der Elemente möglich, wie sie beispielsweise als Ziegler/Natta-Katalysatoren bekannt sind und beispielsweise in der EP-Anmeldung 95110693 beschrieben sind.

Ein weiterer Gegenstand der Erfindung ist ein Verfahren zur Herstellung von Polyolefinen durch Polymerisation oder Copolymerisation von Olefinen, das dadurch gekennzeichnet ist, daß als Polymerisationskatalysator der erfindungsgemäße geträgerte Polyolefin-Katalysator eingesetzt wird, sowie die Verwendung von geträgerten Polyolefin-Katalysatoren gemäß Erfindung bei der Polymerisation oder Copolymerisation von Olefinen zur Herstellung von Polyolefinen.

Der erfindungsgemäße Trägerkatalysator kann sowohl als Pulver, als auch als Suspension in einem inerten Kohlenwasserstoff, beispielsweise Pentan, Hexan, Cyclohexan oder Mineralöle, in die Polymerisationsmischung eingebracht werden.

Die Polymerisation wird in bekannter Weise in Lösungs-, Suspensions- oder Gasphasenverfahren, kontinuierlich oder diskontinuierlich bei einer Temperatur von -10 bis +200°C, vorzugsweise +20 bis +80°C durchgeführt.

Der erfindungsgemäße Trägerkatalysator ist ohne weitere aktivierende Zusätze polymerisationsaktiv. Es erweist sich jedoch als besonders vorteilhaft, als Scavanger und als zusätzlichen Aktivator Aluminiumalkyle, bevorzugt Trimethyl-, Triethyl- oder Triisobutylaluminium einzusetzen. Die eingesetzte Menge beträgt, bezogen auf das Aluminium, 50 - 5 000, bevorzugt 100 - 500 mol pro mol Übergangsmetall des Polyolefin-Katalysators.

Polymerisiert oder copolymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 20 C-Atomen. R^{a} und R^{b} können jedoch auch mit den sie verbindenden C-Atomen einen Ring bilden. Beispielsweise werden Olefine wie Ethylen, Propylen, 1-Buten, 1-Hexen, 4-Methyl-1-penten, 1-Octen, Cyclopenten, Norbornen oder Norbornadien polymerisiert oder copolymerisiert. Bevorzugt werden Ethylen, Propylen und Buten, besonders bevorzugt Ethylen und Propylen, polymerisiert oder copolymerisiert.

Als Molmassenregler wird, falls erforderlich, Wasserstoff zugegeben. Der Gesamtdruck der Polymerisation beträgt üblicherweise 0,5 - 150 bar. Bevorzugt ist die Polymerisation in dem Druckbereich von 1 - 40 bar.

Wenn die Polymerisation als Suspensions- oder Lösungspolymerisation durchgeführt wird, wird ein inertes Lösemittel verwendet. Beispielsweise können aliphatische oder cycloaliphatische Kohlenwasserstoffe, wie Pentan, Hexan oder Cyclohexan, verwendet werden. Brauchbar ist auch Toluol. Bevorzugt wird im flüssigen Monomeren polymerisiert.

Bei der Copolymerisation von Ethylen mit Propylen wird vorzugsweise in flüssigem Propylen oder in Hexan als Suspensionsmittel polymerisiert. Vorzugsweise wird bei der Polymerisation in flüssigem Propylen das Ethylen in der Menge zugeführt, daß sich über der Flüssigphase ein Partialdruckverhältnis P_{C3}/P_{C2} > 0,5, insbesondere > 1,0 einstellt (P_{C2} = Partialdruck des Ethylens in der Gasphase über der Suspension; P_{C3} = Partialdruck des Propylens in der Gasphase über der Suspension). Bei der Copolymerisation in Hexan als Suspensionsmittel wird ein Ethylen /Propylen-Gasgemisch mit einem Propylengehalt von 1 bis 50 Mol%, vorzugsweise 5 bis 30 Mol%, zugesetzt. Der Gesamtdruck wird während der Polymerisation durch Nachdosierung konstant gehalten. Der Gesamtdruck liegt bei 0,5 bis 40 bar, vorzugsweise 1 bis 20 bar. Die Dauer der Polymerisation beträgt 10 Minuten bis 6 Stunden, vorzugsweise 30 Minuten bis 2 Stunden.

Die erfindungsgemäß verwendeten Trägerkatalysatoren ermöglichen die Herstellung von Homo-, Co- und Blockcopolymeren. Durch ihren Einsatz ist es möglich, die Korngröße der Polymerisate in Abhängigkeit von den Herstellungsbedingungen des Trägers gezielt zu steuern. Es ist deshalb der besondere Vorteil des erfindungsgemäßen Katalysators, daß die Korngröße der Polymerisate an die jeweiligen Erfordernisse der eingesetzten Technologie angepaßt werden kann.
Außer der Möglichkeit zur gezielten Steuerung der Korngröße und der Korngrößenverteilung besitzt das erfindungsgemäße Verfahren den weiteren Vorteil, daß die erhaltenen Polyolefine in granulatartiger Form vorliegen und daß sie insbesondere auch bei hohen Polymerisationsumsätzen eine hohe Schüttdichte sowie einen geringen Feinkornanteil aufweisen.
Weitere Vorteile ergeben sich aus der Herstellungstechnologie. Der Katalysator ist prinzipiell nach einem "Eintopfverfahren" herstellbar, wobei bei entsprechender Reaktionsführung keine störenden Nebenprodukte entstehen und die verwendeten Lösungsmittel recyclierbar sind.

Die nachfolgenden Beispiele sollen die Erfindung näher erläutern.

Es bedeuten
- MC: Metallocen,
- MAO: Methylaluminoxan,
- TIBAL: Triisobutylaluminium
- M_{w}: gewichtsmittlere Molmasse in g/mol ermittelt durch GPC,
- Mₙ: zahlenmittlere Molmasse in g/mol ermittelt durch GPC,
- M_{w}/Mₙ: Verteilungsbreite
- d₅₀: mittlerer Korndurchmesser ermittelt durch Siebanalyse,
- Tₘ: Schmelzpunkt ermittelt durch DSC.

### Beispiel 1 Herstellung des Trägerkatalysators A

15 g Siliziumdioxid (Typ Grace Grade 955 W) wurden bei 200°C über einen Zeitraum von 4 Stunden im Trockenrohr unter Stickstoffgegenstrom getrocknet. Der OH-Gehalt betrug 1,83 mmol/g SiO₂.
3,3 g des getrockneten Oxides wurden in einem Dreihalskolben, ausgerüstet mit einer Rühreinrichtung und zwei Tropftrichtern, mit 60 ml trockenem Toluol suspendiert. Im ersten Tropftrichter wurden 6,27 g ( 30,2 mmol Al) einer 30%-igen toluolischen Methylaluminoxan-Lösung mit 95 ml Toluol gemischt, im zweiten Tropftrichter wurden 100 ml einer Lösung aus Bisphenol A und sauerstofffreiem Toluol (Gesamtbisphenol-Gehalt: 275,8 mg Bisphenol A; 1,208 mmol) abgefüllt. Nachdem 20 ml der MAO-Lösung unter mäßigem Rühren der Suspension vorgelegt worden sind, erfolgte das gleichzeitige Zutropfen der beiden Lösungen. Die Rührergeschwindigkeit betrug während dieses Vorganges 200 U/min. Die Zutropfgeschwindigkeit war niedrig und wurde so gewählt, daß beide Lösungen unter adäquater Volumenabnahme verbraucht wurden. Anschließend wurde eine weitere Stunde nachgerührt. Danach wurde die Suspension stehengelassen. Es setzte sich ein feiner weißer Feststoff ab. Das überstehende Toluol wurde entfernt, der Rückstand erneut mit Toluol aufgenommen und 15 min bei 70°C gewaschen. Der Al-Gehalt der Waschlösung betrug 0,08 Mol-% (bezogen auf eingesetzte Mole Al). Nach Entfernung der überstehenden Waschlösung wurde eine Lösung aus 0,096 mmol Bis(trimethylsilyl)silandiyl-bis(2-methyl-indenyl)zirkoniumdichlorid (hergestellt gemäß DE-Anmeldung 19527047) und 60 ml Toluol zudosiert. Dabei färbte sich die Suspension tieforange, im Verlauf der Rührphase wurde diese Farbe immer intensiver. Nach 10 Stunden wurde die Rührung abgestellt, die überstehende klare Lösung zeigte keinerlei Verfärbung mehr. Nach Entfernung des Lösungsmittels im Vakuum bei 50°C erhielt man einen rot/orangefarbenen feinverteilten Feststoff.

### Beispiel 2 Polymerisation mit Trägerkatalysator A

Ein 2 1 Rührreaktor (Fa. Büchi) wurde nach dem Inertisieren bei Raumtemperatur mit 1,2 ml einer 1 molaren Triisobutylaluminium/Hexan-Lösung und 200 g flüssigem Propylen gefüllt und die Mischung bei 350 Umdrehungen/min 3 Minuten gerührt.
110 mg des unter Beispiel 1 hergestellten Trägerkatalysators A wurden mit weiteren 300 g Propylen in den Reaktor gespült, die Rührzahl auf 700 U/min erhöht, der Ansatz innerhalb von 15 min auf die Polymerisationstemperatur von 70°C aufgeheizt und die Temperatur konstant gehalten. Die Reaktion wurde durch Flashen des Propylens nach zwei Stunden beendet. Es wurden 220 g Polypropylen mit einem mittleren Korndurchmesser d₅₀ gemäß Siebanalyse von 315 µm und einem Feinkornanteil (< 100 µm) von 1,5 Gew-% erhalten. Die Aktivität betrug 2 kg/g Trägerkatalysator. Die Polymerpartikel waren granulatartig ( M_{w} = 385.000 g/mol; Verteilungsbreite 2,5; Tₘ = 147°C), der Reaktor zeigte keine Wandbeläge.

### Beispiel 3 Herstellung des Trägerkatalysators B

Die Herstellung des Trägerkatalysators B erfolgte analog zur Trägerkatalysatorherstellung in Beispiel 1. 2,97 g des getrockneten Oxides wurden mit 60 ml trockenem Toluol suspendiert. Im ersten Tropftrichter wurden 11,3 g ( 54,4 mmol Al) einer 30%-igen toluolischen Methylaluminoxan-Lösung mit 190 ml Toluol gemischt, im zweiten Topftrichter wurden 200 ml einer Lösung aus Bisphenol A und Toluol (Gesamtbisphenol-Gehalt: 558,85 mg Bisphenol A; 2,448 mmol) abgefüllt. Nachdem 50 ml der MAO-Lösung unter mäßigem Rühren der Suspension vorgelegt worden sind, erfolgte das gleichzeitige langsame Zutropfen der beiden Lösungen. Nach Beendigung der Reaktion wurde eine Stunde gerührt und nachfolgend zweimal mit Toluol gewaschen. Nach Entfernung der überstehenden Waschlösung wurde eine Lösung aus 0,133 mmol Dimethylsilandiyl-bis(2-methyl-indenyl)zirkoniumdichlorid (Fa. Boulder Scientific Company) und 80 ml Toluol zudosiert. Nach 10 Stunden wurde die Rührung abgestellt. Nach Entfernung der überstehenden Lösung wurde noch zweimal mit Toluol gewaschen und anschließend im Vakuum bei 50°C getrocknet.

### Beispiel 4 Polymerisation mit Trägerkatalysator B

Die Polymerisationsdurchführung erfolgte analog Beispiel 2, jedoch wurden 67 mg des Trägerkatalysators B eingesetzt und 1,2 ml einer 1 molaren TIBAL/Hexan-Lösung verwendet.
Es wurden 114 g Polypropylen mit einem mittleren Korndurchmesser d₅₀ gemäß Siebanalyse von 500 µm und einem Feinkornanteil (< 100 µm) von 0,8 Gew-% erhalten. Die Ausbeute betrug 1,7 kg/g Trägerkatalysator. Die Polymerpartikel waren granulatartig (M_{w}= 307.000 g/mol; Verteilungsbreite 2,3 ; Tₘ= 147°C).

### Beispiel 5 Polymerisation mit dem Trägerkatalysator B

Ein 20 l Rührreaktor wurde nach dem Inertisieren bei Raumtemperatur mit 14 ml einer 1 molaren Triisobutylaluminium/Hexan-Lösung und 6500 g flüssigem Propylen gefüllt und die Mischung bei 300 Umdrehungen/min 5 Minuten gerührt.
335 mg des unter Beispiel 3 hergestellten Trägerkatalysators B wurden mit weiteren 500 g Propylen in den Reaktor gespült, die Rührzahl auf 400 U/min erhöht, der Ansatz innerhalb von 20 min auf die Polymerisationstemperatur von 70°C aufgeheizt und konstant gehalten. Die Reaktion wurde durch Flashen des überschüssigen Monomeren nach zwei Stunden beendet. Es wurden 856 g Polypropylen mit einem mittleren Korndurchmesser d₅₀ gemäß Siebanalyse von 500 µm, mit einem Feinkornanteil (< 100 µm) von 0,35 Gew-% erhalten. Die Aktivität betrug 2,14 kg/g Trägerkatalysator. Die Polymerpartikel waren granulatartig und rieselfähig ( M_{w} =316.000 g/mol; Verteilungsbreite ; Tₘ = 147°C), der Reaktor zeigte keinerlei Wandbeläge.

### Beispiel 6 Polymerisation mit dem Trägerkatalysator B

Ein 20 l Rührreaktor wurde nach dem Inertisieren bei Raumtemperatur mit 3 ml einer 1 molaren Triisobutylaluminium/Hexan-Lösung und 6500 g flüssigem Propylen gefüllt und die Mischung bei 300 Umdrehungen/min 5 Minuten gerührt.
408 mg des unter Beispiel 3 hergestellten Trägerkatalysators B wurden mit weiteren 500 g Propylen in den Reaktor gespült, die Rührzahl auf 400 U/min erhöht, der Ansatz innerhalb von 20 min auf die Polymerisationstemperatur von 70°C aufgeheizt und konstant gehalten. Die Reaktion wurde durch Flashen des überschüssigen Monomeren nach zwei Stunden beendet. Es wurden 1023 g Polypropylen mit einem mittleren Korndurchmesser d₅₀ gemäß Siebanalyse von 500 µm, mit einem Feinkornanteil (< 100 µm) von 0,2 Gew-% erhalten. Die Aktivität betrug 2,5 kg/g Trägerkatalysator. Die Polymerpartikel waren granulatartig und rieselfähig ( M_{w} =301.000 g/mol; Verteilungsbreite 2,5; Tₘ = 147°C), der Reaktor zeigte keinerlei Wandbeläge.

### Beispiel 7 Herstellung des Trägerkatalysators C

12 g Siliziumdioxid (Typ Grace Grade 955 W) wurden bei 120°C über einen Zeitraum von 4 Stunden im Trockenrohr unter Stickstoffgegenstrom getrocknet. Der OH-Gehalt betrug 2,26 mmol/g SiO₂.
2,97 g des getrockneten Oxides wurden in einem Dreihalskolben, ausgerüstet mit einer Rühreinrichtung und zwei Tropftrichtern, mit 60 ml trockenem Toluol suspendiert. Im ersten Tropftrichter wurden 8,45 g ( 40,69 mmol Al) einer 30%-igen toluolischen Methylaluminoxan-Lösung mit 100 ml Toluol gemischt, im zweiten Topftrichter wurden 180 ml einer Lösung aus Bisphenol A und sauerstofffreiem Toluol (Gesamtbisphenol-Gehalt: 459 mg Bisphenol A; 2,01 mmol) abgefüllt. Nachdem 20 ml der MAO-Lösung unter mäßigem Rühren der Suspension vorgelegt worden sind, erfolgte das gleichzeitige Zutropfen der beiden Lösungen. Die Rührergeschwindigkeit betrug während dieses Vorganges 200 U/min. Die Zutropfgeschwindigkeit war niedrig und so gewählt, daß beide Lösungen unter adäquater Volumenabnahme verbraucht wurden. Anschließend wurde noch eine weitere Stunde gerührt. Danach wurde die Suspension stehengelassen. Es setzte sich ein feiner weißer Feststoff ab. Das überstehende Toluol wurde entfernt, der Rückstand erneut mit Toluol aufgenommen und 15 min bei 70°C gewaschen. Der Al-Gehalt der Waschlösung betrug 0,09 Mol-% (bezogen auf eingesetzte Mole Al). Nach Entfernung der überstehenden Waschlösung wurde eine Lösung aus 0,102 mmol Dimethylsilandiyl-bis(2-methyl-indenyl)zirkoniumdichlorid (Fa. Boulder Scientific Company) und 60 ml Toluol zudosiert. Dabei färbte sich die Suspension orange, im Verlauf der Rührphase wurde diese Farbe immer intensiver. Es wurde 5 Stunden bei 70°C gerührt, danach die überstehende klare Lösung entfernt und nochmals mit Toluol bei 70°C gewaschen. Anschließend ist der Rückstand im Vakuum bei 50°C getrocknet worden. Zurück blieb ein rot/orangefarbener feinverteilter Feststoff.

### Beispiel 8 Polymerisation mit dem Trägerkatalysator C

Die Polymerisationsdurchführung erfolgte analog Beispiel 2, jedoch wurden 68 mg des Trägerkatalysators C eingesetzt und 0,8 ml einer 1 molaren TIBAL/Hexan-Lösung verwendet.
Es wurden 80 g Polypropylen mit einem mittleren Korndurchmesser d₅₀ gemäß Siebanalyse von 400 µm und einem Feinkornanteil (< 100 µm) von 0,8 Gew-% erhalten. Die Ausbeute betrug 1,17 kg/g Trägerkatalysator. Die Polymerpartikel waren granulatartig (M_{w}= 316.000 g/mol; Verteilungsbreite 2,3 ; Tₘ= 146°C; Schüttdichte 0,31 g/cm³).

### Beispiel 9 Polymerisation mit dem Trägerkatalysator C

Die Polymerisationsdurchführung erfolgte analog Beispiel 2, jedoch wurden 98 mg des Trägerkatalysators B eingesetzt und 2 ml einer 1 molaren TIBAL/Hexan-Lösung verwendet. Im Unterschied zu den vorangegangenen Beispielen wurde jedoch nur die Hälfte TIBAL-Lösung mit 200g Propylen vorgelegt, die andere Hälfte wurde dem Trägerkatalysator direkt im Katfeeder zugegeben, die Verweilzeit des Katalysators mit der TIBAL-Lösung vor der Zudosierung in den Reaktor betrug 5 min.
Es wurden 110 g Polpropylen mit einem mittleren Korndurchmesser d₅₀ gemäß Siebanalyse von 400 µm und einem Feinkornanteil (< 100 µm) von 0,51 Gew-% erhalten. Die Ausbeute betrug 1,12 kg/g Trägerkatalysator. Die Polymerpartikel waren granulatartig (Schüttdichte 0,33 g/cm³; M_{w}= 339.000 g/mol; Verteilungsbreite 2,4; Tₘ= 147°C).

### Beispiel 10 Polymerisation mit dem Trägerkatalysator C

Die Polymerisationsdurchführung erfolgte analog Beispiel , jedoch wurden in einem 20 l-Reaktor 508 mg des Trägerkatalysators C eingesetzt und 7,5 ml einer 1 molaren TIBAL/Hexan-Lösung verwendet. Es wurden 910 g Polypropylen mit einem mittleren Korndurchmesser d₅₀ gemäß Siebanalyse von 400 µm und einen Feinkornanteil (< 100 µm) von 0,15 Gew.-%. Die Aktivität betrug 1,8 kg/g Trägerkatalysator. Die Polymerpartikel waren granulatartig und rieselfähig, der Reaktor zeigte keine Wandbeläge.

### Beispiel 11 Herstellung des Trägerkatalysators D

3,0 g des bei 120°C getrockneten Oxides (analog Beispiel 6) wurden in einem Dreihalskolben, ausgerüstet mit einer Rühreinrichtung und zwei Tropftrichtern, mit 60 ml trockenem Toluol suspendiert. Im ersten Tropftrichter wurden 11,3 g ( 54,4 mmol Al) einer 30%-igen toluolischen Methylaluminoxan-Lösung mit 210 ml Toluol gemischt, im zweiten Topftrichter wurden 220 ml einer Lösung aus Bisphenol A und sauerstofffreiem Toluol (Gesamtbisphenol-Gehalt: 559 mg Bisphenol A; 2,44 mmol) abgefüllt. Nachdem 20 ml der MAO-Lösung unter mäßigem Rühren der Suspension vorgelegt worden sind, erfolgte das gleichzeitige Zutropfen der beiden Lösungen. Die Rührergeschwindigkeit betrug während dieses Vorganges 200 U/min. Die Zutropfgeschwindigkeit war niedrig und so gewählt, daß beide Lösungen unter adäquater Volumenabnahme verbraucht wurden. Anschließend wurde noch eine weitere Stunde gerührt. Danach wurde die Suspension stehengelassen. Es setzte sich ein feiner weißer Feststoff ab. Das überstehende Toluol wurde entfernt, der Rückstand erneut mit 180 ml Toluol aufgenommen und 15 min bei 70°C gewaschen. Der Al-Gehalt der Waschlösung betrug 0,6 Mol-% (bezogen auf eingesetzte Mole Al). Nach Entfernung der überstehenden Waschlösung wurde eine Lösung aus 0,136 mmol Dimethylsilandiyl-bis(2-methyl-indenyl)-zirkoniumdichlorid (Fa. Boulder Scientific Company) und 80 ml Toluol zudosiert. Dabei färbte sich die Suspension orange, im Verlauf der Rührphase wurde diese Farbe immer intensiver. Es wurde 8 Stunden bei 70°C gerührt, danach die überstehende klare Lösung entfernt und nochmals mit Toluol bei 70°C gewaschen. Anschließend ist der Rückstand im Vakuum bei 50°C getrocknet worden. Zurück blieb ein rot/orangefarbener feinverteilter Feststoff.

### Beispiel 12 Polymerisation mit dem Trägerkatalysator D

Die Polymerisationsdurchführung erfolgte analog Beispiel 2, jedoch wurden 66 mg des Trägerkatalysators D eingesetzt und 1,2 ml einer 1 molaren TIBAL/Hexan-Lösung verwendet.
Es wurden 164 g Polypropylen mit einem mittleren Korndurchmesser d₅₀ gemäß Siebanalyse von 400 µm ohne Feinkornanteil (< 100 µm) erhalten. Die Ausbeute betrug 2,48 kg/g Trägerkatalysator. Die Polymerpartikel waren granulatartig (M_{w}= 312.000 g/mol; Verteilungsbreite 2,4; Tₘ= 147°C; Schüttdichte 0,31 g/cm³).

### Beispiel 13 Polymerisation mit dem Trägerkatalysator D

Die Polymerisationsdurchführung erfolgte analog Beispiel 2, jedoch wurden 66 mg des Trägerkatalysators D eingesetzt und 0,8 ml einer 1 molaren TIBAL/Hexan-Lösung verwendet.
Es wurden 206 g Polypropylen mit einem mittleren Korndurchmesser d₅₀ gemäß Siebanalyse von 500 µm ohne Feinkornanteil (< 100 µm) erhalten. Die Ausbeute betrug 3,12 kg/g Trägerkatalysator. Die Polymerpartikel waren granulatartig und rieselfähig, der Reaktor zeigte keine Wandbeläge (M_{w}= 301.000 g/mol; Verteilungsbreite 2,3; Tₘ= 148°C).

### Beispiel 14 Polymerisation mit dem Trägerkatalysator D

Die Polymerisationsdurchführung erfolgte analog Beispiel 2, jedoch wurden 69 mg des Trägerkatalysators D eingesetzt und 0,6 ml einer 1 molaren TIBAL/Hexan-Lösung verwendet.
Es wurden 220 g Polypropylen mit einem mittleren Korndurchmesser d₅₀ gemäß Siebanalyse von 500 µm ohne Feinkornanteil (< 100 µm) erhalten. Die Ausbeute betrug 3,18 kg/g Trägerkatalysator. Die Polymerpartikel waren granulatartig und rieselfähig, der Reaktor zeigte keine Wandbeläge (M_{w}= 294.000 g/mol; Verteilungsbreite 2,4; Tₘ= 148°C).

### Beispiel 15 Herstellung des Trägerkatalysators E

Die Herstellung des Trägerkatalysators E erfolgte analog zur Trägerkatalysator-herstellung in Beispiel 1. 3,2 g des getrockneten Oxides wurden mit 80 ml trockenem Toluol suspendiert. Im ersten Tropftrichter wurden 12,16 g ( 58,5 mmol Al) einer 30%-igen toluolischen Methylaluminoxan-Lösung mit 190 ml Toluol gemischt, im zweiten Topftrichter wurden 200 ml einer Lösung aus Bisphenol A und Toluol (Gesamtbisphenol-Gehalt: 601,5 mg Bisphenol A; 2,63 mmol) abgefüllt. Nachdem 50 ml der MAO-Lösung unter mäßigem Rühren der Suspension vorgelegt worden sind, erfolgte das gleichzeitige langsame Zutropfen der beiden Lösungen. Nach Beendider Reaktion wurde eine Stunde gerührt und nachfolgend zweimal mit Toluol gewaschen. Nach Entfernung der überstehenden Waschlösung wurde eine Lösung aus 0,155 mmol Dimethylsilandiyl-bis(indenyl)-zirkoniumdichlorid (Fa. Witco) und 80 ml Toluol zudosiert. Nach 6 Stunden wurde die Rührung abgestellt. Nach Entfernung der überstehenden Lösung wurde noch einmal mit Toluol gewaschen und anschließend im Vakuum bei 50°C getrocknet.

### Beispiel 16 Polymerisation mit dem Trägerkatalysator E

Die Polymerisationsdurchführung erfolgte analog Beispiel 2, jedoch wurden 51 mg des Trägerkatalysators E eingesetzt und 0,4 ml einer 1 molaren TIBAL/Hexan-Lösung verwendet. Die Polymerisationsdauer betrug 1 Stunde.
Es wurden 110 g Polypropylen mit einem mittleren Korndurchmesser d₅₀ gemäß Siebanalyse von 400 µm und einem Feinkornanteil (< 100 µm) von 0,7 Gew-% erhalten. Die Ausbeute betrug 2,16 kg/g Trägerkatalysator. Die Polymerpartikel waren granulatartig und rieselfähig, der Reaktor zeigte keine Wandbeläge (M_{w}= 40.000 g/mol; Verteilungsbreite 2,3; Tₘ= 136°C).

### Beispiel 17 Herstellung des Trägerkatalysators F

3,47 g des wie in Beispiel 1 getrockneten Oxides wurden in einem Dreihalskolben, ausgerüstet mit einer Rühreinrichtung und zwei Tropftrichtern, mit 80 ml trockenem Toluol suspendiert. Im ersten Tropftrichter wurden 13,28 g ( 63,5 mmol Al) einer 30%-igen toluolischen Methylaluminoxan-Lösung mit 187 ml Toluol gemischt, im zweiten Tropftrichter wurden 201 ml einer gesättigten Lösung aus Bisphenol A und sauerstofffreiem Toluol (Gesamtbisphenol-Gehalt: 655 mg Bisphenol A; 2,87 mmol) abgefüllt. Anschließend erfolgte das gleichzeitige Zutropfen der beiden Lösungen. Die Rührergeschwindigkeit betrug während dieses Vorganges 200 U/min. Die Zutropfgeschwindigkeit war niedrig und wurde so gewählt, daß beide Lösungen unter adäquater Volumenabnahme verbraucht wurden. Anschließend wurde eine weitere Stunde nachgerührt. Danach wurde die Suspension stehengelassen. Es setzte sich ein feiner weißer Feststoff ab. Das überstehende Toluol wurde entfernt, der Rückstand erneut mit Toluol aufgenommen und 15 min bei 70°C gewaschen. Nach Entfernung der überstehenden Waschlösung wurde eine Lösung aus 0,196 mmol Bis(trimethylsilyl)silandiyl-bis(2-methyl-indenyl)zirkoniumdichlorid (hergestellt gemäß DE-Anmeldung 195 27 047) und 60 ml Toluol zudosiert. Dabei färbte sich die Suspension orange, im Verlauf der Rührphase wurde diese Farbe immer intensiver. Nach 8 Stunden wurde die Rührung abgestellt, die überstehende klare Lösung zeigte keinerlei Verfärbung mehr. Nach Entfernung des Lösungsmittels im Vakuum bei 50°C erhielt man einen rot/orangefarbenen feinverteilten Feststoff.

### Beispiel 18 Polymerisation mit Trägerkatalysator F

Ein 2 l Rührreaktor (Fa. Büchi) wurde nach dem Inertisieren bei Raumtemperatur mit 1,2 ml einer 1 molaren Triisobutylaluminium/Hexan-Lösung und 200 g flüssigem Propylen gefüllt und die Mischung bei 350 Umdrehungen/min 3 Minuten gerührt.
101 mg des unter Beispiel 17 hergestellten Trägerkatalysators F wurden mit weiteren 300 g Propylen in den Reaktor gespült, die Rührzahl auf 700 U/min erhöht, der Ansatz innerhalb von 15 min auf die Polymerisationstemperatur von 70°C aufgeheizt und die Temperatur konstant gehalten. Die Reaktion wurde durch Flashen des Propylens nach zwei Stunden beendet. Es wurden 260 g Polypropylen mit einem mittleren Korndurchmesser d₅₀ gemäß Siebanalyse von 315 µm und einem Feinkornanteil (< 100 µm) von 4 Gew-% erhalten. Die Aktivität betrug 2,6 kg/g Trägerkatalysator. Die Polymerpartikel waren granulatartig ( M_{w} = 380.000 g/mol; Verteilungsbreite 2,4; Tₘ = 147°C), der Reaktor zeigte keine Wandbeläge.

## Patentansprüche

1. Verfahren zur Herstellung eines Katalysatorträgers, dadurch gekennzeichnet, daß man
a) ein hydrophiles anorganisches Oxid eines Elementes aus der II. bis IV. Hauptgruppe oder der IV. Nebengruppe des Periodensystems oder deren Mischungen bzw. Mischoxide bei 110 bis 800°C trocknet, anschließend
b) gegebenenfalls die freien Hydroxylgruppen des Oxids ganz oder teilweise mit Aluminoxanen der Formel I 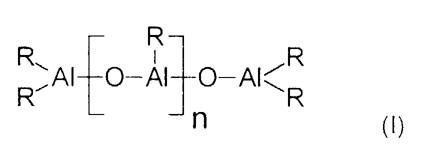 und/oder der Formel II 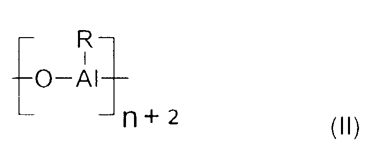 oder Aluminiumalkylen umsetzt und anschließend
c) gleichzeitig mit Aluminoxanen der Formel I und/oder der Formel II und mehrfunktionellen organischen Vernetzungsmitteln aus der Gruppe der organischen Verbindungen mit mehr als einer funktionellen Gruppe, die mit einer Metallkohlenstoff-Bindung reagieren können, umsetzt, wobei das Molverhältnis Aluminium zu Oberflächenhydroxylgruppen zwischen 1 und 50 liegt.

2. Verfahren gemäß Anspruch 1, dadurch gekennzeichnet, daß in Stufe a) ein Aluminiumoxid, Siliziumoxid, Magnesiumoxid, Titanoxid oder ein Zirkoniumoxid oder deren Mischungen bzw. Mischoxide eingesetzt werden.

3. Verfahren gemäß Anspruch 1 oder 2, dadurch gekennzeichnet, daß in Stufe c) bifunktionelle Vernetzungsmittel eingesetzt werden.

4. Verfahren gemäß Anspruch 3, dadurch gekennzeichnet, daß in Stufe c) Diole, Diamine oder Diepoxyverbindungen oder deren Gemische als Vernetzungsmittel eingesetzt werden.

5. Katalysatorträger auf Basis eines hydrophilen anorganischen Oxids eines Elementes der II. bis IV. Hauptgruppe oder der IV. Nebengruppe des Periodensystems oder deren Mischungen bzw. Mischoxiden, dadurch gekennzeichnet, daß er durch gleichzeitige Vernetzung mit Aluminoxanen und mit mehrfunktionellen organischen Vernetzungsmitteln gemäß Anspruch 1 erhältlich ist.

6. Geträgerter Polyolefin-Katalysator, dadurch gekennzeichnet, daß er das Umsetzungsprodukt aus einem Katalysatorträger gemäß einem der Ansprüche 1 bis 5 mit einem oder mehreren Polyolefin-Katalysatoren enthält.

7. Geträgerter Polyolefin-Katalysator gemäß Anspruch 6, dadurch gekennzeichnet, daß er das Umsetzungsprodukt aus einem Katalysatorträger gemäß einem der Ansprüche 1 bis 5 mit einem oder mehreren Metallocenen enthält.

8. Verfahren zur Herstellung von Polyolefinen durch Polymerisation oder Copolymerisation von Olefinen, dadurch gekennzeichnet, daß als Polymerisationskatalysator ein geträgerter Polyolefin-Katalysator gemäß Anspruch 6 oder 7 eingesetzt wird.

9. Verfahren zur Herstellung von Polyolefinen gemäß Anspruch 8, dadurch gekennzeichnet, daß bei der Polymerisation zusätzlich Aluminiumalkyle eingesetzt werden.

10. Verwendung von geträgerten Polyolefin-Katalysatoren gemäß Anspruch 6 oder 7 bei der Polymerisation oder Copolymerisation von Olefinen zur Herstellung von Polyolefinen.

## Claims

1. Process for the production of a catalyst support, characterised in that
a) a hydrophilic inorganic oxide of an element from main groups II to IV or subgroup IV of the periodic system or mixtures thereof or mixed oxides is/are dried at 110 to 800°C, then
b) the free hydroxyl groups of the oxide are optionally entirely or partially reacted with aluminoxanes of the formula I 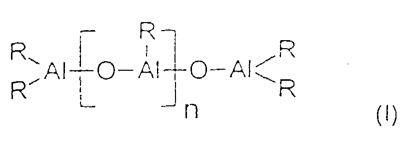 and/or of the formula II 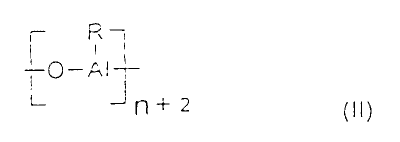 or aluminiumalkyls and then
c) is/are reacted simultaneously with aluminoxanes of the formula I and/or of the formula II and polyfunctional organic crosslinking agents from the group of organic compounds having more than one functional group which are capable of reacting with a metal/carbon bond, wherein the molar ratio of aluminium to surface hydroxyl groups is between 1 and 50.

2. Process according to claim 1, characterised in that an aluminium oxide, silicon oxide, magnesium oxide, titanium oxide or a zirconium oxide or mixtures thereof or mixed oxides are used in stage a).

3. Process according to claim 1 or 2, characterised in that difunctional crosslinking agents are used in stage c).

4. Process according to claim 3, characterised in that diols, diamines or diepoxy compounds or mixtures thereof are used as the crosslinking agent in stage c).

5. Catalyst support based on a hydrophilic, inorganic oxide of an element of main groups II to IV or of subgroup IV of the periodic system or mixtures thereof or mixed oxides, characterised in that it is obtainable by simultaneous crosslinking with aluminoxanes and with polyfunctional organic crosslinking agents according to claim 1.

6. Supported polyolefin catalyst, characterised in that it contains the reaction product of a catalyst support according to one of claims 1 to 5 with one or more polyolefin catalysts.

7. Supported polyolefin catalyst according to claim 6, characterised in that it contains the reaction product of a catalyst support according to one of claims 1 to 5 with one or more metallocenes.

8. Process for the production of polyolefins by polymerisation or copolymerisation of olefins, characterised in that a supported polyolefin catalyst according to claim 6 or 7 is used as the polymerisation catalyst.

9. Process for the production of polyolefins according to claim 8, characterised in that aluminiumalkyls are additionally used in the polymerisation.

10. Use of supported polyolefin catalysts according to claim 6 or 7 in the polymerisation or copolymerisation of olefins for the production of polyolefins.

## Revendications

1. Procédé de préparation d'un support de catalyseur, caractérisé en ce que :
a) on sèche un oxyde inorganique hydrophile d'un élément choisi parmi les principaux groupes II à IV ou le groupe secondaire IV du système périodique, ou des mélanges de ceux-ci ou des oxydes mixtes, à une température ce 110 à 800°C, ensuite
b) le cas échéant, on fait réagir, partiellement ou totalement, les groupes hydroxyles libres de l'oxyde avec des aluminoxanes de formule I 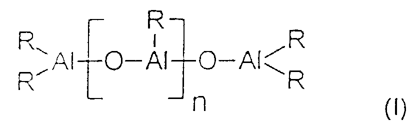 et/ou de formule Il 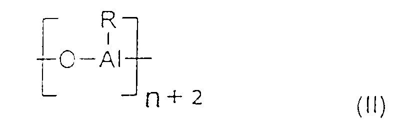 ou avec des alkyl-aluminium, et ensuite
c) on effectue une réaction simultanément avec des aluminoxanes de formule I et/ou de formule II et avec des agents de réticulation organiques polyfonctionnels choisis dans l'ensemble constitué par les composés organiques ayant plus d'un groupe fonctionnel qui peuvent réagir avec une liaison métal-carbone, le rapport molaire de l'aluminium aux groupes hydroxyles superficiels étant compris entre 1 et 50.

2. Procédé selon la revendication 1, caractérisé en ce qu'on utilise, dans l'étape a), un oxyde d'aluminium, un oxyde de silicium, un oxyde de magnésium, un oxyde de titane ou un oxyde de zirconium, ou des mélanges de ceux-ci ou des oxydes mixtes.

3. Procédé selon la revendication 1 ou 2, caractérisé en ce qu'on utilise des agents de réticulation bifonctionnels dans l'étape c).

4. Procédé selon la revendication 3, caractérisé en ce qu'on utilise des diols, des diamines ou des composés diépoxy ou des mélanges de ceux-ci en tant qu'agents de réticulation dans l'étape c).

5. Support de catalyseur à base d'oxyde inorganique hydrophile d'un élément des principaux groupes II à IV ou du groupe secondaire IV du système périodique ou de mélanges de ceux-ci ou d'oxydes mixtes, caractérisé en ce qu'on peut l'obtenir par réticulation simultanée avec des aluminoxanes et avec des agents de réticulation organiques polyfonctionnels selon la revendication 1.

6. Catalyseur supporté pour polyoléfines, caractérisé en ce qu'il contient le produit de réaction d'un support de catalyseur selon l'une des revendications 1 à 5 avec un ou plusieurs catalyseurs pour polyoléfines.

7. Catalyseur supporté pour polyoléfines selon la revendication 6, caractérisé en ce qu'il contient le produit de réaction d'un support de catalyseur selon l'une des revendications 1 à 5 avec un ou plusieurs métallocènes.

8. Procédé de préparation de polyoléfines par polymérisation ou copolymérisation d'oléfines, caractérisé en ce qu'on utilise un catalyseur supporté pour polyoléfines selon la revendication 6 ou 7 en tant que catalyseur de polymérisation.

9. Procédé de préparation de polyoléfines selon la revendication 8, caractérisé en ce qu'on utilise, en outre, des alkyl-aluminium pendant la polymérisation.

10. Utilisation de catalyseurs supportés pour polyoléfines selon la revendication 6 ou 7 pour la polymérisation ou la copolymérisation d'oléfines pour la préparation de polyoléfines.
